# FASCICULE DE BREVET EUROPEEN

(11) **EP 1 299 272 B1**
(45) Date de publication et mention de la délivrance du brevet: **12.01.2005**
(21) Numéro de dépôt: 01923767.6
(22) Date de dépôt: 09.04.2001
(51) Int. Cl.: B60R 25/04

(54) **PROCEDE DE GESTION DU FONCTIONNEMENT D'UN DISPOSITIF DE SECURITE ANTIVOL POUR VEHICULE A MOTEUR ET LE DISPOSITIF POUR LA MISE EN OEUVRE DU PROCEDE**
BETRIEBSTEUERUNGSVERFAHREN EINER KRAFTFAHRZEUGDIEBSTAHLSICHERUNG UND VORRICHTUNG ZUR AUSFÜHRUNG DIESES VERFAHRENS
METHOD FOR MANAGING THE OPERATING CONDITIONS OF AN ANTI-THEFT SECURITY DEVICE FOR A MOTOR VEHICLE AND DEVICE THEREFOR

(30) Priorité: 10.04.2000 FR 0004788
(43) Date de publication de la demande: 09.04.2003
(73) Titulaire: SEVIC SYSTEM AG, 56564 Neuwied (DE)
(72) Inventeur: ALBERT, Pascal, F-44850 Saint-Mars du Desert (FR)
(74) Mandataire: Dennemeyer, John James
(86) Numéro de dépôt international: PCT/FR2001/001079
(87) Numéro de publication internationale: WO 2001/076919

(56) Documents cités:
- EP-A- 0 319 428
- US-A- 4 987 406
- US-A- 5 349 329

## Description

La présente invention concerne un procédé de gestion du fonctionnement d'un dispositif de sécurité antivol pour véhicule à moteur (véhicule automobile, motocyclette ou camion), ce dispositif étant du type comprenant - des moyens émetteurs portables, - des moyens récepteurs embarqués sur le véhicule et - des moyens de commande d'au moins un système qui assure la coupure d'au moins un circuit nécessaire au fonctionnement dudit véhicule (circuit d'allumage du moteur, circuit d'arrivée de carburant ou autre...) lorsque la distance entre les moyens émetteurs et les moyens récepteurs dépasse une certaine valeur. Cette invention concerne aussi le dispositif de sécurité antivol permettant la mise en oeuvre du procédé.

On connaît par le document EP 0 319 428 A un dispositif de sécurité pour véhicule automobile selon le préambule de la revendication 5 comportant un émetteur portable qui émet un signal haute fréquence (HF), et un récepteur fixe adapté pour couper automatiquement le circuit d'allumage du moteur du véhicule lorsque la distance entre ledit émetteur portable et ledit récepteur embarqué dépasse une certaine valeur. Un tel système permet de stopper la motorisation du véhicule, en particulier en cas de vol, dès que ce véhicule s'éloigne du porteur de l'émetteur.
L'émetteur émet un signal HF cyclique codé, de faible puissance. Lorsque ce signal est reconnu et validé par les moyens de réception, un relais ou équivalent ferme le circuit d'allumage du moteur pour assurer son fonctionnement. Lorsque le système de réception ne reçoit plus le signal HF émis, le relais coupe le circuit d'allumage pour stopper la motorisation.

Des moyens de temporisation sont prévus pour maintenir la commande du relais pendant une durée supérieure à la durée qui sépare deux séquences codées, de manière à éviter une interruption abusive en cas de parasites, ou plus généralement en cas de perte accidentelle du signal.
Cependant, si la durée de perte accidentelle de ce signal est supérieure à la durée de temporisation, le circuit d'allumage est automatiquement coupé par l'intermédiaire du relais et la motorisation du véhicule ne fonctionne plus. Dans le cas où cela survient alors que le véhicule est en utilisation, le conducteur peut avoir tendance à commander la manette ou la pédale d'accélérateur, et au moment où le signal se rétablit, la remise en fonctionnement brutale de la motorisation peut entraîner une perte de contrôle du véhicule.

Le but de la présente invention est de remédier à cet inconvénient.

Ainsi, conformément à la présente invention, on gère le fonctionnement du dispositif de sécurité antivol de manière à assurer un rétablissement progressif du circuit d'allumage et/ou d'un autre circuit nécessaire au fonctionnement du véhicule, suite à une coupure de ce circuit liée à une perte accidentelle du signal.

Le rétablissement du ou des circuit(s) correspondant(s) est de préférence assuré après une succession d'activations et de désactivations du système de coupure placé sur ledit ou lesdits circuit(s).
Cette succession d'activations et de désactivations s'effectue de préférence avec des durées de désactivation décroissantes et aussi avec des durées d'activation décroissantes.

On sécurise ainsi l'utilisation du dispositif antivol puisque le rétablissement simplement progressif du ou des circuit(s) nécessaire(s) au fonctionnement du véhicule, après une coupure liée à une perte accidentelle du signal, évite tout risque de perte de contrôle du véhicule.

Le dispositif de sécurité antivol qui permet la mise en oeuvre de ce procédé comprend des moyens émetteurs portables, un module récepteur embarqué sur le véhicule et des moyens de commande d'un système de coupure d'au moins un circuit nécessaire au fonctionnement du véhicule (circuit d'allumage du moteur, circuit d'arrivée de carburant...), pour couper ce ou ces circuit(s) lorsque la distance entre ledit émetteur et ledit récepteur dépasse une certaine valeur. Conformément à l'invention, ce dispositif comprend aussi des moyens qui, lors du rétablissement du ou des circuit(s) correspondant(s), suite à une coupure liée à une perte accidentelle du signal, assurent le rétablissement de ce ou de ces circuit(s) uniquement de manière progressive.

Selon une forme de réalisation préférée, le système de coupure est en forme de sortie de puissance interposée sur le circuit d'allumage du moteur pour couper ou rétablir ce circuit en fonction du signal ou de l'absence de signal fourni par des moyens de commande en forme de microprocesseur ; ce microprocesseur gère l'envoi du signal correspondant en fonction des informations reçues du système de réception.
Le système de coupure peut aussi se présenter sous la forme d'une électrovanne placée sur le circuit d'arrivée de carburant.

Selon une autre caractéristique, une sortie de puissance commandée par le microprocesseur permet l'activation des feux clignotants du véhicule, ainsi que l'activation d'un dispositif sonore de type « buzzer ».

Toujours selon l'invention, des moyens adaptés permettent de détecter la présence d'un contact démarreur, et l'information correspondante est transmise au microprocesseur pour que celui-ci puisse différencier la procédure de fonctionnement du dispositif de sécurité en cas de perte du signal, selon la présence ou l'absence de ce contact démarreur.

Mais l'invention sera encore illustrée, sans être aucunement limitée, par la description suivante d'un mode de réalisation particulier, donné uniquement à titre d'exemple et représenté sur les dessins annexés dans lesquels :
- la figure 1 est un schéma de principe des moyens émetteurs portables du dispositif de sécurité antivol conforme à la présente invention ;
- la figure 2 est un schéma de principe des moyens de réception embarqués sur le véhicule ;
- la figure 3 est un graphique qui illustre le type de signal adressé par le microprocesseur à la sortie de puissance placée sur le circuit d'allumage de la motorisation du véhicule, pour assurer une reprise uniquement progressive de l'allumage.

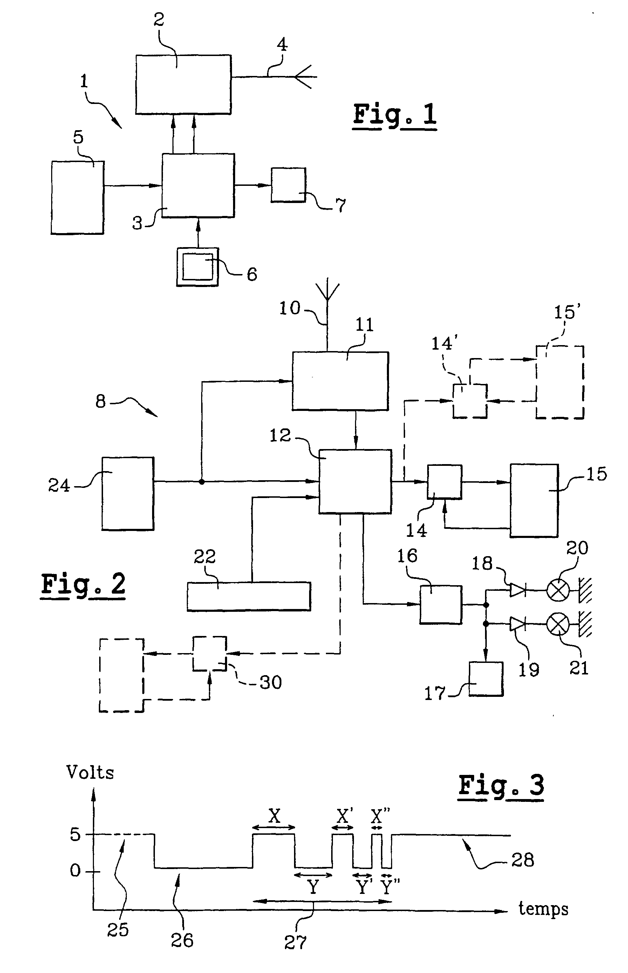

Les moyens émetteurs 1 représentés sur la figure 1 comprennent un module d'émission 2, par exemple haute fréquence (HF), dont le fonctionnement est géré par un microprocesseur 3 pour adresser à une antenne 4 un signal codé de type cyclique et de faible puissance.
Le module d'émission 2 peut être un modèle LQ-TX 433A-S de la Société LPRS - Oxon - Grande-Bretagne. Le microprocesseur 3 à horloge intégrée, peut être un modèle 2343 avec EDPROM, de la Société ATMEL (Paris, France).

Les différents composants des moyens émetteurs 1 sont implantés sur un circuit imprimé et reliés entre eux de manière logique. Une batterie 5 assure leur alimentation électrique et l'ensemble est placé dans un boîtier portable qui peut être muni d'un système d'accrochage sur une poche ou une ceinture.
La mise en ou hors service des moyens émetteurs 1 est commandée par un interrupteur marche/arrêt 6 aménagé sur le boîtier portable. Ce boîtier comporte également un témoin lumineux 7 du genre LED dont l'activation est gérée par le microprocesseur 3.

Le signal émis par les moyens émetteurs 1 porte un codage généré par le microprocesseur 3 pour sécuriser le fonctionnement du dispositif. D'autre part, ce signal est émis de manière cyclique pour économiser la batterie 5 ; par exemple l'émission est réalisée sur la fréquence des 433 Mhertz, et ceci pendant une seconde toutes les 2,5 ou 3 secondes (la durée d'émission et la période sont gérées par le microprocesseur 3).
On prévoit aussi de limiter la puissance du signal émis (quelques milliwatts) de manière à permettre une réception uniquement dans un rayon de quelques mètres.

Les moyens récepteurs 8 représentés sur la figure 2 sont embarqués sur le véhicule équipé. Ils sont constitués d'une antenne 10 connectée à un module de réception 11 associé à un microprocesseur 12. Ce microprocesseur 12 est chargé de vérifier, par identification de codage, que le signal reçu est bien celui provenant des moyens émetteurs 1 et, en fonction des informations reçues, chargé de gérer l'activation :
- d'une sortie de puissance 14 (relais ou équivalent) placée sur le circuit d'allumage 15 de la motorisation du véhicule, et
- d'une sortie de puissance 16 (relais ou équivalent) qui commande, simultanément, une alarme sonore 17 en forme de « buzzer » et une sortie dédoublée avec diodes anti-retour 18, 19 pour alimenter les faisceaux clignotants droit 20 et gauche 21 du véhicule.

Le microprocesseur 12 tient également compte de la présence ou de l'absence d'un contact démarreur du véhicule pour gérer le fonctionnement du dispositif de sécurité. L'information correspondante lui est transmise par des moyens de détection appropriés 22 (par exemple à partir d'une détection de tension sur le contacteur marche/arrêt du démarreur).

Le module de réception 11 peut être un modèle RX 5000 fabriqué par la Société RFM (USA) et distribué par la Société EQUIPEMENT SCIENTIFIQUE - GARCHE - France. Le microprocesseur 12 est par exemple un modèle 2343 avec EDPROM de la Société ATMEL (Paris, France).
Les différents composants électroniques des moyens récepteurs 8 sont implantés sur un circuit imprimé et reliés entre eux de manière logique. Le module de réception 11 et le microprocesseur 12 sont alimentés par la batterie 24 du véhicule.

Une fois les moyens récepteurs 8 correctement implantés sur le véhicule équipé (par exemple une motocyclette) le dispositif de sécurité antivol fonctionne de la manière décrite ci-après.

Les moyens émetteurs 1 étant désactivés (interrupteur 6 sur position « arrêt ») le module récepteur 11 ne reçoit pas le signal HF correspondant et le microprocesseur 12 commande la sortie de puissance 14 de manière à ce que le circuit d'allumage 15 du véhicule soit ouvert, interdisant le fonctionnement de la motorisation.

La mise en service du dispositif de sécurité antivol est réalisée en actionnant l'interrupteur 6 (mise sur position « marche »), le témoin lumineux 7 pouvant alors signaler cette activation, par exemple par un éclairage continu, dit « long », de une à deux secondes.

Lorsque l'utilisateur s'approche de son véhicule, le module récepteur 11 détecte le signal HF émis par les moyens émetteurs 1 et il envoie l'information au microprocesseur 12. Après identification du signal, le microprocesseur 12 ferme le circuit d'allumage 15 en actionnant la sortie de puissance 14, et provoque l'émission d'un message d'identification en actionnant les feux clignotants 20, 21 et le « buzzer » 17 par l'intermédiaire de la sortie de puissance 16 (par exemple émission de trois signaux clignotants « brefs » accompagnés de trois bips sonores).
On peut alors démarrer le véhicule et l'utiliser à volonté de manière conventionnelle.

Lorsque l'utilisateur s'arrête, coupe le moteur et s'éloigne du véhicule, dès que le module récepteur 11 ne reçoit plus le signal HF émis par les moyens émetteurs 1, le microprocesseur 12 actionne la sortie de puissance 14 pour couper le circuit d'allumage 15. Cette activation du système anti-démarrage est signalée par les feux clignotants 20, 21 et le « buzzer » 17 (par exemple émission d'un signal lumineux « bref » accompagné d'un bip sonore).
L'activation correspondante des sorties de puissance 14 et 16 peut être réalisée un certain délai après la perte effective du signal HF par le module récepteur 11, par exemple dix secondes après.
Le véhicule ne peut alors plus démarrer avant le retour du porteur des moyens émetteurs 1 dans la zone de détection du module récepteur 11.

En cas d'agression ou de vol, moteur en marche, lorsque le véhicule s'éloigne de l'utilisateur et que le module récepteur 11 ne reçoit plus le signal HF émis par les moyens émetteurs 1, le microprocesseur 12 actionne la sortie de puissance 14 pour couper le circuit d'allumage 15. Cette opération ne s'accompagne alors d'aucun signal lumineux ou sonore ; elle peut être réalisée seulement un certain délai après la perte de réception du signal HF, par exemple dix secondes après.
L'agresseur/voleur ne peut alors plus redémarrer le véhicule et il n'a pas d'autre solution que de le quitter et de s'enfuir.

Au moment où l'utilisateur s'approche à nouveau de son véhicule, le dispositif de sécurité l'identifie, désactive le système anti-démarrage et émet les signaux lumineux et sonores de reconnaissance (par exemple sous la forme de trois signaux clignotants accompagnés de trois bips sonores).

Lorsqu'il n'a plus à utiliser le véhicule, l'utilisateur désactive les moyens émetteurs HF par action sur l'interrupteur 6 (mise sur position « arrêt ») et le système anti-démarrage est automatiquement mis en service. La désactivation des moyens émetteurs 1 peut s'accompagner d'un signal de contrôle du témoin lumineux 7 (par exemple un éclairage continu « court » de l'ordre de quelques dixièmes de secondes).

L'utilisation de moyens émetteur/récepteur entraîne un risque d'activation abusive du système anti-démarrage en cas de perte accidentelle du signal (présence de parasites ou autres ...). Alors, la coupure momentanée ou les coupures successives du circuit d'allumage perturbe(nt) le bon fonctionnement du véhicule en déplacement.

Pour limiter ce risque, le microprocesseur 12 intègre une temporisation qui, suite à une validation du signal reçu par le module récepteur 11, permet de maintenir la sortie de puissance 14 dans la position de fermeture du circuit d'allumage 15 pendant une durée englobant au moins une période entière du signal HF cyclique.

Dans le cas où la perte accidentelle du signal dépasse la durée de cette temporisation, le circuit d'allumage est automatiquement coupé ; le dispositif de sécurité intègre des moyens qui permettent alors, lorsque le module de réception 11 reçoit de nouveau convenablement le signal émis, de rétablir le circuit d'allumage 15 uniquement de manière progressive.

Cette reprise d'allumage progressive est gérée par le microprocesseur 12 dont le signal adressé alors à la sortie de puissance 14 est de type discontinu, avant de retrouver un caractère continu correspondant à un fonctionnement normalisé du dispositif de sécurité et de la motorisation du véhicule. Cette gestion particulière de commande de la sortie de puissance 14 permet d'éviter tous les risques de perte de contrôle du véhicule qui seraient liés à un rétablissement brutal du circuit d'allumage.

La gestion du signal adressé dans ce cas particulier par le microprocesseur 12 à la sortie de puissance 14 est illustrée sur la figure 3.

Sur cette figure, on remarque une première période 25 de fonctionnement « normal » durant laquelle le microprocesseur 12 commande la sortie de puissance 14 pour fermer le circuit d'allumage 15 par envoi d'un signal électrique 5 volts, suivie d'une période 26 durant laquelle le microprocesseur 12 n'adresse plus le signal électrique correspondant à la sortie de puissance 14, du fait par exemple d'un problème de réception du signal HF envoyé par les moyens émetteurs 1.

Lorsque la réception du signal HF se rétablit, le microprocesseur 12 envoie un signal discontinu à la sortie de puissance 14 pendant une période de temps 27, avant de revenir à l'adressage d'un signal continu (période repérée 28).
Le signal discontinu au cours de la période 27 correspond à une succession d'activations et de désactivations de la sortie de puissance 14. Pour obtenir un rétablissement bien progressif de l'allumage du moteur, les durées d'activations successives X, X', X" sont décroissantes, tout comme les durées de désactivations intermédiaires Y, Y', Y" (Par exemple X = 0,5 s., Y = 0,4 s., X' = 0,3 s., Y' = 0,2 s., X" = 0,1 s., Y" = 0,1 s.).

Le microprocesseur 12 peut de la même manière gérer la coupure du circuit d'arrivée de carburant, ou la coupure de tout autre circuit nécessaire au fonctionnement du véhicule, à partir des informations fournies par les moyens émetteurs/récepteurs. Cette gestion sur un autre circuit que le circuit d'allumage 15 peut être réalisée en complément ou en remplacement de l'action sur ledit circuit d'allumage 15.
Sur la figure 2, on a illustré un principe de gestion en simultané de la coupure du circuit d'allumage 15 et du circuit d'arrivée de carburant 15' (représenté en pointillés) ; le système de coupure 14' du circuit d'arrivée de carburant 15' peut se présenter sous la forme d'un module du type électrovanne, placé sur le circuit correspondant.

On notera encore que le microprocesseur 12 peut aussi gérer une ou plusieurs sortie(s) de puissance supplémentaire(s) 30, chargée(s) par exemple d'activer ou de désactiver la fonction démarreur du véhicule, ou même pour un véhicule automobile, chargée(s) de commander le verrouillage des portes, la remontée des vitres, ou autre ...

## Revendications

1. Procédé de gestion du fonctionnement d'un dispositif de sécurité antivol pour véhicule à moteur, lequel dispositif est constitué de moyens émetteurs portables (1), d'un module récepteur (11) embarqué sur ledit véhicule et de moyens de commande (12) d'un système (14, 14') qui assure la coupure d'au moins un circuit (15, 15') nécessaire au fonctionnement du véhicule, lorsque la distance entre lesdits moyens émetteurs (1) et ledit module récepteur (11) dépasse une certaine valeur, **caractérisé en ce qu'**il consiste, lors du rétablissement dudit circuit (15, 15') suite à une coupure liée à une perte accidentelle du signal, à assurer ce rétablissement uniquement de manière progressive.

2. Procédé selon la revendication 1, **caractérisé en ce qu'**il consiste à assurer le rétablissement du circuit (15, 15') nécessaire au fonctionnement du véhicule, après une succession d'activations et de désactivations du système de coupure (14, 14').

3. Procédé selon la revendication 2, **caractérisé en ce qu'**il consiste à assurer le rétablissement du circuit (15, 15') après une succession d'activations et de désactivations du système de coupure (14, 14'), avec des durées de désactivations décroissantes.

4. Procédé selon la revendication 3, **caractérisé en ce qu'**il consiste à assurer le rétablissement du circuit (15, 15') après une succession d'activations et de désactivations du système de coupure (14, 14'), avec des durées d'activations décroissantes.

5. Dispositif de sécurité antivol pour la mise en oeuvre du procédé selon l'une quelconque des revendications 1 à 4, lequel dispositif est constitué de moyens émetteurs portables (1), d'un module récepteur (11) embarqué sur ledit véhicule et de moyens de commande (12) d'un système de coupure (14, 14') d'au moins un circuit (15, 15') nécessaire au fonctionnement du véhicule, pour couper ledit circuit (15, 15') lorsque la distance entre ledit émetteur (1) et ledit récepteur (11) dépasse une certaine valeur, **caractérisé en ce qu'**il comprend des moyens qui, lors du rétablissement dudit circuit (15, 15') suite à une coupure liée à une perte accidentelle du signal, assurent le rétablissement de ce circuit (15, 15') de manière progressive.

6. Dispositif de sécurité selon la revendication 5, **caractérisé en ce que** le système de coupure est un système de coupure (14) en forme de sortie de puissance interposée sur ledit circuit qui est un circuit d'allumage (15) du moteur pour couper ou rétablir ce circuit en fonction du signal ou de l'absence de signal fourni par des moyens de commande en forme de microprocesseur (12), lequel microprocesseur (12) gère l'envoi de ce signal en fonction des informations reçues du module récepteur (11).

7. Dispositif de sécurité selon l'une quelconque des revendications 5 ou 6, **caractérisé en ce qu'**il comprend un dispositif de coupure (14') en forme d'électrovanne placé sur le circuit d'arrivée de carburant (15') pour couper ou rétablir ce circuit en fonction du signal ou de l'absence de signal fourni par des moyens de commande en forme de microprocesseur (12), lequel microprocesseur (12) gère l'envoi de ce signal en fonction des informations reçues du module récepteur (11).

8. Dispositif de sécurité selon l'une quelconque des revendications 6 ou 7, **caractérisé en ce qu'**il comprend une sortie de puissance (16) commandée par le microprocesseur (12), permettant l'activation des feux clignotants (20, 21) du véhicule, et l'activation d'un dispositif sonore (17) de type buzzer.

9. Dispositif de sécurité selon l'une quelconque des revendications 6 à 8, **caractérisé en ce qu'**il comporte des moyens (22) qui permettent de détecter la présence d'un contact démarreur, l'information correspondante étant transmise au microprocesseur (12) pour différencier la procédure de fonctionnement en cas de perte du signal, en fonction de la présence ou de l'absence dudit contact démarreur.

10. Dispositif de sécurité selon l'une quelconque des revendications 6 à 9, **caractérisé en ce qu'**il comprend au moins une sortie de puissance supplémentaire (30) commandée par le microprocesseur (12) pour activer ou désactiver des fonctions de sécurité complémentaires.

11. Dispositif de sécurité selon l'une quelconque des revendications 6 à 10, **caractérisé en ce qu'**il comprend des moyens émetteurs (1) en forme de boîtier portable intégrant - un module (2) d'émission d'un signal cyclique codé de faible puissance, - des moyens en forme de microprocesseur (3) assurant la gestion du signal émis par le module émetteur (2), notamment en terme de codage et en terme d'envoi cyclique, - une batterie d'alimentation (5), - un interrupteur marche/arrêt (6) et - un voyant lumineux de contrôle (7).

## Claims

1. A method for managing the operation of an anti-theft security device for a motor vehicle, said device consisting of portable transmitting means (1), a receiving module (11) on board said vehicle, and means controlling (12) a system (14, 14") for interrupting at least one circuit (15, 15') required for operating the vehicle, when the distance between said transmitting means (1) and said receiving module (11) exceeds a certain value,
**characterized in that** it consists, when resetting said circuit (15, 15') following an interruption relative to accidental signal loss, in performing said resetting only gradually.

2. A method according to claim 1, **characterized in that** it consists in performing the resetting of the circuit (15, 15') required for operating the vehicle, after a succession of activations and deactivations of the interruption system (14, 14').

3. A method according to claim 2, **characterized in that** it consists in performing the resetting of the circuit (15, 15') after a succession of activations and deactivations of the interruption system (14, 14'), with decreasing durations of deactivations.

4. A method according to claim 3, **characterized in that** it consists in performing the resetting of the circuit (15, 15') after a succession of activations and deactivations of the interruption system (14, 14'), with decreasing durations of activations.

5. An anti-theft security device for the implementation of the method according to any of the claims 1 to 4, said device consisting of portable transmitting means (1), a receiving module (11) on board said vehicle, and means controlling (12) an interruption system (14, 14') of at least one circuit (15, 15') required for operating the vehicle, for interrupting said circuit (15, 15') when the distance between said transmitter(1) and said receiver (11) exceeds a certain value,
**characterized in that** it comprise means which, when resetting said circuit (15, 15') following an interruption relative to accidental signal loss, perform the gradual resetting of this circuit (15, 15').

6. A security device according to claim 5, **characterized in that** said interruption device is an interruption device (14) in the form of a power output interposed on said ignition circuit (15) of the engine for interrupting or resetting this circuit in relation to the signal or of the absence of a signal supplied by controlling means in the form of a microprocessor (12), which microprocessor (12) manages the sending of this signal in relation to the information received from the receiving module (11).

7. A security device according to any of the claims 5 or 6, **characterized in that** it comprises an interruption device (14') in the form of an electrovalve placed on the fuel intake circuit (15') for interrupting or resetting this circuit in relation to the signal or of the absence of a signal supplied by controlling means in the form of a microprocessor (12), which microprocessor (12) manages the sending of this signal in relation to the information received from the receiving module (11).

8. A security device according to any of the claims 6 or 7, **characterized in that** it comprises a power output (16) controlled by the microprocessor (12), enabling activation of the blinking warning lights (20,21) of the vehicle, and activation of a sound device (17) such as a buzzer.

9. A security device according to any of the claims 6 to 8, **characterized in that** it comprises means (22) which enable to sense the presence of a starter contact, the corresponding information being transmitted to the microprocessor (12) to differentiate the operating procedure in case of signal loss, in relation to the presence or the absence of said starter contact.

10. A security device according to any of the claims 6 to 9, **characterized in that** it comprises at least one additional power output (30) controlled by the microprocessor (12) to activate or deactivate complementary security functions.

11. A security device according to any of the claims 6 to 10, **characterized in that** it comprises transmitting means (1) in the form of a portable case integrating
- a module (2) for transmitting a low power encoded cyclic signal,
- means in the form of a microprocessor (39 performing the management of the signal transmitted by the transmitting module (2), notably in terms of encoding and in terms of cyclic sending,
- a supply battery (5),
- an on/off switch (6),and
- a control light indicator (7).

## Patentansprüche

1. Verfahren zum Betrieb einer Diebstahlsicherungsvorrichtung für Kraftfahrzeuge, wobei die Vorrichtung aus tragbaren Sendemitteln (1), einem im Fahrzeug mitgeführten Empfangsmodul (11) und Steuermitteln (12) für ein System (14, 14') besteht, das bei Überschreiten eines bestimmten Abstandswertes zwischen den Sendemitteln (1) und dem Empfangsmodul (11) die Abschaltung mindestens eines für den Betrieb des Fahrzeuges erforderlichen Stromkreises (15, 15') gewährleistet, **dadurch gekennzeichnet, dass** bei der Wiedereinschaltung des Stromkreises (15, 15') im Anschluss an eine Abschaltung durch unbeabsichtigten Signalverlust diese Wiedereinschaltung nur schrittweise erfolgt.

2. Verfahren nach Anspruch 1, **dadurch gekennzeichnet, dass** es darin besteht, die Wiedereinschaltung des für den Betrieb des Fahrzeuges erforderlichen Stromkreises (15, 15') nach einer Folge von Aktivierungen und Deaktivierungen des Abschaltsystems (14, 14') zu gewährleisten.

3. Verfahren nach Anspruch 2, **dadurch gekennzeichnet, dass** es darin besteht, die Wiedereinschaltung des Stromkreises (15, 15') nach einer Folge von Aktivierungen und Deaktivierungen des Abschaltsystems (14, 14') mit abnehmenden Deaktivierungsdauern zu gewährleisten.

4. Verfahren nach Anspruch 3, **dadurch gekennzeichnet, dass** es darin besteht, die Wiedereinschaltung des Stromkreises (15, 15') nach einer Folge von Aktivierungen und Deaktivierungen des Abschaltsystems (14, 14') mit abnehmenden Aktivierungsdauern zu gewährleisten.

5. Diebstahlsicherungsvorrichtung zur Durchführung des Verfahrens nach einem der Ansprüche 1 bis 4, bestehend aus tragbaren Sendemitteln (1), einem im Fahrzeug mitgeführten Empfangsmodul (11) und Steuermitteln (12) für ein System (14, 14'), das bei Überschreiten eines bestimmten Abstandswertes zwischen den Sendemitteln (1) und dem Empfangsmodul (11) die Abschaltung mindestens eines für den Betrieb des Fahrzeuges erforderlichen Stromkreises (15, 15') gewährleistet, **dadurch gekennzeichnet, dass** bei der Wiedereinschaltung des Stromkreises (15, 15') im Anschluss an eine Abschaltung durch unbeabsichtigten Signalverlust diese Wiedereinschaltung nur schrittweise erfolgt.

6. Diebstahlsicherungsvorrichtungen nach Anspruch 5, **dadurch gekennzeichnet, dass** das Abschaltsystem (14) als Leistungsausgang ausgebildet ist, der im Zündstromkreis (15) des Motors zum Abschalten bzw. Wiedereinschalten dieses Kreises in Abhängigkeit des von den als Mikroprozessor (12) ausgebildeten Steuermitteln gelieferten Signals bzw. fehlenden Signals zwischengeschaltet ist, wobei der Mikroprozessor (12) das Senden dieses Signals in Abhängigkeit der vom Empfangsmodul (11) empfangenen Informationen steuert.

7. Sicherheitsvorrichtung nach einem der Ansprüche 5 oder 6, **dadurch gekennzeichnet, dass** sie eine als Magnetventil ausgebildete, an der Kraftstoffzufuhrleitung (15') angeordnete Abschaltvorrichtung (14') aufweist zum Abschalten bzw. Wiedereinschalten dieses Kreises in Abhängigkeit des von den als Mikroprozessor (12) ausgebildeten Steuermitteln gelieferten Signals bzw. fehlenden Signals, wobei der Mikroprozessor (12) das Senden dieses Signals in Abhängigkeit der vom Empfangsmodul (11) empfangenen Informationen steuert.

8. Sicherheitsvorrichtung nach einem der Ansprüche 6 oder 7, **dadurch gekennzeichnet, dass** sie einen durch den Mikroprozessor (12) gesteuerten Leistungsausgang (16) aufweist, der die Betätigung der Blinklichter (20, 21) des Fahrzeuges und die Betätigung einer akustischen Vorrichtung (17) vom Typ "Summer" ermöglicht.

9. Sicherheitsvorrichtung nach einem der Ansprüche 6 bis 8, **dadurch gekennzeichnet, dass** sie Mittel (22) zum Erfassen eines Startkontaktes aufweist, wobei die entsprechende Information an den Mikroprozessor (12) weitergeleitet wird zur Unterscheidung des Funktionsablaufes bei Signalverlust in Abhängigkeit davon, ob der Startkontakt vorliegt oder nicht.

10. Sicherheitsvorrichtung nach einem der Ansprüche 6 bis 9, **dadurch gekennzeichnet, dass** sie mindestens einen weiteren, durch den Mikroprozessor (12) gesteuerten Leistungsausgang (30) zur Aktivierung bzw. Deaktivierung der zusätzlichen Sicherheitsfunktionen aufweist.

11. Sicherheitsvorrichtung nach einem der Ansprüche 6 bis 10, **dadurch gekennzeichnet, dass** es als tragbares Gehäuse ausgebildete Sendemittel (1) aufweist mit - einem Modul (2) zum zyklischen Senden eines schwachen kodierten Signals - als Mikroprozessor (3) ausgebildeten Mitteln zum Steuern des vom Sendemodul (2) ausgesendeten Signals, insbesondere was die Kodierung und das zyklische Senden anbetrifft - einer Speisebatterie (5) - einem Ein-/Ausschalter (6) und - einer Kontrollleuchte (7).
